# EUROPEAN PATENT SPECIFICATION

(11) **EP 4 496 039 B1**
(45) Date of publication and mention of the grant of the patent: **18.11.2026**
(21) Application number: 23775362.9
(22) Date of filing: 24.03.2023
(51) Int. Cl.: H01M 4/62, H01M 4/36, H01M 4/38, H01M 4/13, H01M 4/139, H01M 4/04, C01B 32/158, H01M 4/02, H01M 10/052, H01M 4/136, H01M 4/1397

(54) **POSITIVE ELECTRODE FOR LITHIUM-SULFUR BATTERY COMPRISING DIFFERENT TYPES OF CONDUCTIVE MATERIALS AND LITHIUM ION SECONDARY BATTERY COMPRISING THE SAME**
POSITIVELEKTRODE FÜR LITHIUM-SCHWEFEL-BATTERIE MIT VERSCHIEDENEN ARTEN VON LEITENDEN MATERIALIEN UND LITHIUM-IONEN-SEKUNDÄRBATTERIE DAMIT
ÉLECTRODE POSITIVE POUR BATTERIE AU LITHIUM-SOUFRE COMPRENANT DIFFÉRENTS TYPES DE MATÉRIAUX CONDUCTEURS ET BATTERIE SECONDAIRE AU LITHIUM-ION LA COMPRENANT

(30) Priority: 24.03.2022 KR 20220036689
(43) Date of publication of application: 22.01.2025
(73) Proprietor: LG Energy Solution, Ltd., Seoul 07335 (KR)
(72) Inventor: KIM, Bong-Soo, Daejeon 34122 (KR); KIM, Il-To, Daejeon 34122 (KR); SONG, Myeong-Jun, Daejeon 34122 (KR); AHN, Ji-Hoon, Daejeon 34122 (KR)
(74) Representative: Goddar, Heinz J.
(86) International application number: PCT/KR2023/003982
(87) International publication number: WO 2023/182867

(56) References cited:
- EP-A1- 3 059 790
- EP-A1- 3 370 279
- WO-A1-2020/251472
- KR-A- 20190 001 566
- KR-A- 20200 058 644
- KR-A- 20200 121 498
- KR-A- 20210 000 886
- KR-A- 20210 119 720
- US-A1- 2021 313 559
- ZHANG XUQING ET AL: "Carbon fiber-incorporated sulfur/carbon ternary cathode for lithium-sulfur batteries with enhanced performance", JOURNAL OF SOLID STATE ELECTROCHEMISTRY, SPRINGER, BERLIN, DE, vol. 21, no. 4, 25 November 2016 (2016-11-25), pages 1203 - 1210, XP036190129, ISSN: 1432-8488, [retrieved on 20161125], DOI: 10.1007/S10008-016-3460-8

## Description

### TECHNICAL FIELD

The present disclosure relates to a lithium-sulfur battery with improved battery performance such as output and capacity.

The present application claims priority to Korean Patent Application No. 10-2022-0036689 filed on March 24, 2022 in the Republic of Korea.

### BACKGROUND ART

A positive electrode of a lithium-sulfur battery may comprise a conductive material in an amount of 0 to 10 wt% based on 100 wt% of a positive electrode material to conduct electrons, and the commonly used conductive material includes activated carbon materials such as carbon black, denka black, ketjen black or carbon fibers or carbon nanotubes (CNT).

The CNT or carbon fibers are commonly used in a form of a pre-dispersion in which fiber strands are completely dispersed, or powder particles in which carbon fibers are entangled. However, there is no proposed technology to optimize the performance improvement of the conductive material by controlling the dispersion.

### DISCLOSURE

### Technical Problem

The present disclosure is directed to providing a new combination of conductive materials and their amounts for improving the output and capacity characteristics in a positive electrode for a lithium-sulfur battery. The present disclosure is further directed to providing a positive electrode for a lithium-sulfur battery comprising the new combination of conductive materials and a lithium ion secondary battery comprising the positive electrode.

### Technical Solution

The present invention is defined by the appended claims. The present invention relates to a positive electrode material composition of a lithium-sulfur battery, and the composition comprises a positive electrode active material, a conductive material and a binder material, wherein the positive electrode active material comprises a sulfur-carbon composite comprising a porous carbon material and sulfur (S), the conductive material comprises a first conductive material and a second conductive material, the first conductive material comprises fibers having an average particle size of 5 µm or less, the second conductive material comprises secondary particles, the secondary particles comprising agglomerates of two or more primary particles of carbon nanotubes (CNT), an average particle size of the second conductive material is 10 µm to 70 µm, and the positive electrode active material is included in a range between 80 and 97 wt%, the conductive material is included in a range between 2 and 10 wt%, and the binder material is included in a range between 2 and 10 wt% and the first conductive material is included in an amount of 0.1 to 5 wt% and the second conductive material is included in an amount of 1 to 5 wt% based on a total weight 100 wt% of the positive electrode active material, the binder material and the conductive material

Optionally, the first conductive material comprises CNT, and an average number of walls of the CNT is 1 to 20.

Optionally, the first conductive material comprises the CNT, and the first conductive material is included in an amount of 0.1 to 0.5 wt% based on a total weight 100 wt% of the positive electrode active material, the binder material and the conductive material.

Optionally, the first conductive material comprises carbon fibers, and the carbon fibers are 100 nm to 2 µm in diameter.

Optionally, an average number of walls of the CNT as the second conductive material is 1 to 20, and an average diameter of the primary particles of the CNT is 0.4 to 100 nm.

Optionally, the porous carbon material has a BET specific surface area of the primary particles in a range between 100 and 3,000 m²/g.

Optionally, the porous carbon material comprises at least one selected from the group consisting of activated carbon, CNT and graphene.

Optionally, an average number of walls of the CNT is 1 to 20.

Optionally, the sulfur-carbon composite is included in an amount of 70 wt% or more based on 100 wt% of the positive electrode active material.

Optionally, the sulfur is included in an amount of 70 wt% or more based on 100 wt% of the sulfur-carbon composite.

Optionally, the sulfur-carbon composite has at least one of a form of a composite into which the sulfur and the carbon material are simply mixed, a form of a coated core-shell structure, or a form of sulfur loading into pores in the carbon material.

Another aspect of the invention relates to a positive electrode for an electrochemical device comprising the aforementioned positive electrode material composition.

Additionally, another aspect of the present invention relates to a lithium secondary battery comprising the positive electrode for the electrochemical device.

The present invention further relates to a method for preparing a positive electrode forming slurry. The method comprises mixing the positive electrode material composition according to any one of the first to twelfth aspects with a second solvent; adding a first conductive material having a controlled average particle size of 5 µm or less; and adding a second conductive material in powder state, wherein the second conductive material comprises secondary particles comprising agglomerates of two or more primary particles of CNT, and an average particle size of the second conductive material comprising the secondary particles is 10 µm to 70 µm.

Optionally, the second solvent comprises at least one selected from water and an organic solvent.

Optionally, when the first conductive material comprises CNT, the CNT is fed into the slurry in a form of a mixed solvent in which the CNT is mixed with a first solvent.

### Advantageous Effects

In lithium-sulfur secondary batteries, it may be possible to improve output characteristics and capacity by the new combination of conductive materials according to the present invention,

### DESCRIPTION OF DRAWINGS

FIG. 1 shows output and capacity characteristics of batteries according to examples 1 and 2 and comparative example 1 of the present disclosure.
FIG. 2 shows specific resistance measurement results of batteries according to comparative examples 1, 3 and 4.
FIG. 3 shows specific resistance measurement results of batteries according to comparative examples 1, 6, 7 and 8.
FIG. 4a shows discharge characteristics measurement results of batteries according to comparative examples 1 and 2.
FIG. 4b shows discharge characteristics measurement results of batteries according to comparative examples 1, 3 and 4.
FIG. 5 shows discharge characteristics measurement results of batteries according to comparative examples 1, 5 and 6.
FIG. 6 shows discharge characteristics measurement results of batteries according to comparative examples 1, 9 and 10.
FIG. 7 shows discharge characteristics measurement results of batteries according to example 1 and comparative examples 1 and 11.

### BEST MODE

Hereinafter, the present disclosure will be described in more detail.

The term "comprise" or "include" when used in this specification, specifies the presence of stated elements, but does not preclude the presence or addition of one or more other elements, unless the context clearly indicates otherwise.

Additionally, the terms "about" and "substantially" as used herein are used in the sense of at, or nearly at, when given the manufacturing and material tolerances inherent in the stated circumstances, and are used to prevent the unscrupulous infringer from unfairly taking advantage of the present disclosure where exact or absolute figures are stated as an aid to understanding the present disclosure.

Throughout the specification, "A and/or B" refers to either A or B or both.

In the present disclosure, "specific surface area" is measured by the Brunauer, Emmett and Teller (BET) method, and specifically, it may be calculated from the adsorption amount of nitrogen gas under the liquid nitrogen temperature (77K) using BEL Japan's BELSORP-mino II.

The term "polysulfide" as used herein is the concept that covers "polysulfide ion (Sₓ²⁻, x = 8, 6, 4, 2)" and "lithium polysulfide (Li₂Sₓ or LiSₓ⁻, x = 8, 6, 4, 2)".

The term "composite" as used herein refers to a material with physically·chemically different phases and more effective functions, formed by combining two or more materials.

The term "porosity" as used herein refers to a fraction of voids in a structure over the total volume and is represented by %, and may be used interchangeably with void fraction, degree of porosity or the like.

In the present disclosure, "particle size D₅₀" refers to a particle size at 50% of cumulative volume particle size distribution of particles. The particle size D₅₀ may be measured using a laser diffraction method. For example, the particle size D₅₀ may be measured by dispersing the particles in a dispersion medium, introducing into commercially available laser diffraction particle size measurement machine (for example, Microtrac MT 3000), irradiating ultrasound of about 28 kHz with an output of 60W to acquire a cumulative volume particle size distribution graph, and determining the particle size corresponding to 50% of the cumulative volume.

When used herein, "fiber thickness" refers to an average fiber thickness of a fibrous carbon material observed using scanning electron microscopy (SEM), and the fiber thickness may be estimated through the particle size at the location of the smallest peak among peaks observed on the particle size distribution measured by the laser diffraction method.

Additionally, each element in the drawings is arbitrarily depicted in arbitrary size and thickness for convenience of description, and the present disclosure is not necessarily limited thereto. In the drawings, thickness is exaggerated to clearly depict a plurality of layers and regions. Additionally, in the drawings, for convenience of description, the thickness of some layers and regions is exaggerated.

It should be further understood that "comprising" when used in this specification, specifies the presence of stated elements, but does not preclude the presence or addition of one or more other elements unless expressly stated otherwise.

The present disclosure relates to a positive electrode material composition for a lithium-sulfur battery. In an embodiment of the present disclosure, the positive electrode material composition comprises a positive electrode active material, a conductive material and a binder material. In the positive electrode material composition, the positive electrode active material is included in an amount of 80 to 97 wt%, the conductive material is included in an amount of 2 to 10 wt%, and the binder is included in an amount of 2 to 10 wt% based on the total weight of the positive electrode active material, the conductive material and the binder material. Meanwhile, the positive electrode material composition may further comprise a solvent if necessary, and the solvent may further comprise at least one of first and second solvents as described below.

Subsequently, each component will be described in more detail.

### Positive electrode active material

The positive electrode active material according to the present disclosure comprises a sulfur-carbon composite. Preferably, the positive electrode active material may comprise the sulfur-carbon composite in an amount of 80 wt% or more, and preferably 90 wt% or more based on 100 wt% of the positive electrode active material, and more preferably the positive electrode active material may consist of the sulfur-carbon composite. Additionally, the sulfur content is preferably 70 wt% or more based on 100 wt% of the sulfur-carbon composite.

In an embodiment of the present disclosure, the sulfur-carbon composite may be a composite into which the sulfur and the carbon material are simply mixed or may have a coated or loaded core-shell structure. The coated core-shell structure may be a coating of one of the sulfur and the carbon material on the other, and for example, the carbon material surface may be covered with the sulfur or vice versa. Additionally, the loading type may be the sulfur-filled carbon material, in particular, sulfur filled in the pores of the carbon material. The sulfur-carbon composite may include any type of sulfur-carbon composite that satisfies the proposed ratio of amounts of the sulfur based compound and the carbon material and the present disclosure is not limited thereto. Meanwhile, in the present disclosure, the sulfur content is preferably 70 wt% or more based on the total weight of the positive electrode active material.

Since the sulfur is not electrically conductive itself, the sulfur is used in combination with the carbon material. For more details about the carbon material, reference is made to the following description. In an embodiment of the present disclosure, the sulfur may comprise at least one selected from the group consisting of inorganic sulfur (S₈), Li₂Sₙ (n≥1), disulfide compounds such as 2,5-dimercapto-1,3,4-thiadiazole, 1,3,5-trithiocyanuic acid, organic sulfur compounds and carbon-sulfur polymer ((C₂Sₓ)ₙ, x=2.5 to 50, n≥2). Preferably, the sulfur may comprise inorganic sulfur (S₈).

Among many secondary batteries, a lithium-sulfur battery is gaining attention as a next-generation secondary battery since it has high discharge capacity and theoretical energy density, sulfur used as a positive electrode active material is one of the abundant and low-cost elements, leading to lower manufacturing cost of the battery, and it offers eco-friendliness advantage.

In the lithium-sulfur battery, the positive electrode active material, sulfur, does not conduct electricity, and thus to improve the electrical conductivity, it is common to mix sulfur with a conductive material, for example, a carbon material into a sulfur-carbon composite.

The sulfur-carbon composite comprises the porous carbon material and sulfur. In an embodiment of the present disclosure, the sulfur-carbon composite may comprise sulfur loaded into the pores of the porous carbon material.

The carbon material has a porous structure comprising a plurality of non-uniform pores on the surface and inside, and acts as a host to provide skeleton for uniform and stable immobilization of sulfur, and increases low electrical conductivity of sulfur for smooth electrochemical reaction. In particular, in the sulfur-carbon composite, when the carbon material that acts as a sulfur host has a large BET specific surface area and a proper particle size (D₅₀), it may be possible to achieve high sulfur loading, low irreversible capacity and high energy density, thereby increasing sulfur availability in the electrochemical reaction.

In an embodiment of the present disclosure, the BET specific surface area of the carbon material may be a minimum of 100 m²/g and a maximum of 3000m²/g. Along with this or independently of this, the carbon material may have the particle size (D₅₀) of primary particles in a range between 1 µm and 50 µm.

When the BET specific surface area and particle size (D₅₀) of the carbon material satisfy the above-described ranges, it may be possible to uniformly distribute sulfur over the inner and outer surface of the carbon material, and reduce the irreversible capacity, thereby increasing the electrochemical reactivity of sulfur. Additionally, the use of the carbon material improves the electrochemical reactivity, stability and electrical conductivity of the sulfur-carbon composite, thereby improving the capacity and life characteristics of the lithium-sulfur battery and ensuring the optimal charge·discharge performance despite sulfur loss or volume change during charging·discharging.

In case that the particle size (D₅₀) of primary particles is larger than 50 µm, lithium ions have difficulty in moving into the particles due to the limited movement of a material, which makes it difficult to efficiently use sulfur disposed at the center of carbon. In case that the particle size (D₅₀) of primary particles is smaller than 1 µm, it requires a large amount of solvents to prepare an electrode slurry, so it is difficult to increase the solids content, thereby failing to ensure adequate pores between particles, resulting in low output.

In the sulfur-carbon composite of the present disclosure, the carbon material used as a sulfur host may be, in general, manufactured by carbonizing precursors of various carbon materials.

Meanwhile, in an embodiment of the present disclosure, the pores of the carbon material may have the diameter in a range between 0.5 nm and 200 nm on the basis of the longest diameter. The shape of the carbon material may be spherical, rod-like, needle-like, platy, tubular or bulky, and may include, without limitation, any shape commonly used in lithium-sulfur secondary batteries.

The carbon material may comprise any carbon material having porous and conductive properties commonly used in the corresponding technical field. For example, the carbon material may comprise at least one selected from the group consisting of graphite; graphene; carbon black including denka black, acetylene black, ketjen black, channel black, furnace black, lamp black, thermal black; carbon nanotubes (CNT) including single-walled carbon nanotubes (SWCNT), multi-walled carbon nanotubes (MWCNT); carbon fibers including graphite nanofibers (GNF), carbon nanofibers (CNF), activated carbon fibers (ACF); graphite including natural graphite, artificial graphite, expandable graphite; carbon nanoribbon; carbon nanobelt, carbon nanorod and activated carbon.

In the sulfur-carbon composite according to the present disclosure, the sulfur may be disposed on at least one surface of the inner surface of the pores of the carbon material or the outer surface of the carbon material, and in this instance, the sulfur may be present in an area of less than 100% of the entire inner and outer surface of the carbon material, preferably 1 to 95%, and more preferably 60 to 90%. When the sulfur is present on the surface of the carbon material within the above-described range, it may be possible to obtain the maximum effect in terms of electron transport area and electrolyte wetting. Specifically, when the sulfur is impregnated over the surface of the carbon material uniformly to a small thickness at the area of the above-described range, it may be possible to increase the electron transport contact area during charging·discharging. In case that the sulfur is present in the area corresponding to 100% of the entire surface of the carbon material, the carbon material is completely covered with sulfur, resulting in poor electrolyte wetting and low contact with the conductive material included in the electrode, thereby failing to accept electrons and participate in reaction.

Additionally, in an embodiment of the present disclosure, the sulfur-carbon composite may be obtained by the following manufacturing method.

The method for manufacturing the sulfur-carbon composite according to the present disclosure is not limited to a particular one and may include any method commonly used in the corresponding technical field, and the sulfur-carbon composite may be manufactured by a composite manufacturing method including (S1) mixing the carbon material with sulfur, and (S2) forming a composite.

The step (S1) of mixing may be performed using a stirrer commonly used in the corresponding technical field to improve the mixing between the sulfur and the carbon material. In this instance, the mixing time and speed may be selectively adjusted according to the amounts of the raw materials and conditions.

The step (S2) of forming the composite is not limited to a particular method in the present disclosure and may use any method commonly used in the corresponding technical field. The method commonly used in the corresponding technical field may include, for example, a dry process or a wet process such as spray coating. For example, the mixture of the sulfur and the carbon material obtained by mixing may be thermally treated to uniformly coat the molten sulfur on the inner and outer surface of the carbon material. Meanwhile, in an embodiment of the present disclosure, before the thermal treatment, the mixture of the sulfur and the carbon material may be milled by ball milling. In an embodiment of the present disclosure, the thermal treatment may be performed in the temperature condition of 120 to 160°C for about 20 minutes to 24 hours, and a heater such as an oven may be used.

Since the sulfur-carbon composite manufactured through the above-described manufacturing method has large specific surface area, high sulfur loading and improved availability of sulfur, it may be possible to improve the electrochemical reactivity of sulfur and improve the accessibility and contact of the electrolyte solution, thereby improving the capacity and life characteristics of the lithium-sulfur battery.

### Conductive material

The positive electrode material composition according to the present disclosure comprises the conductive material, and the conductive material comprises a first conductive material and a second conductive material.

The first conductive material is fibrous and has an average particle size of 5 *µ*m or less according to particle size distribution (PSD) analysis. The PSD is measured using a particle size distribution analyzer. For example, the PSD may be calculated by putting the first conductive material into commercially available laser PSD particle size measurement machine (for example, Microtrac S3500) and measuring a diffraction pattern difference according to the particle size when particles pass through a laser beam.

In an embodiment of the present disclosure, the average particle size may be a value determined by dry or wet analysis for PSD analysis. For example, the dry analysis is a method of analyzing the particle size of particles dispersed in air, and the wet analysis is a method of analyzing the particle size of particles dispersed in a solvent (for example, water). Meanwhile, the average particle size of the first conductive material may be maintained in the positive electrode material composition, a positive electrode forming slurry and a positive electrode obtained therefrom.

The first conductive material may comprise at least one selected from the group consisting of carbon nanotubes and carbon fibers. In an embodiment of the present disclosure, the carbon fibers may have a fiber diameter of 100 nm to 2 µm. The average number of walls of the carbon nanotubes may be 1 to 20, and the average diameter (diameter) of primary particles (a strand of carbon nanotube) of the carbon nanotubes may be 0.4 to 100 nm. Here, the diameter of the carbon fibers and the diameter of primary particles of the carbon nanotubes may be measured using Transmission Electron Microscope (TEM) or Scanning Electron Microscope (SEM).

The average diameter of primary particles of the carbon nanotubes may be calculated by averaging the diameters of primary particles in an image of the carbon nanotubes observed by TEM or SEM. In this instance, the number of primary particles observed may be, for example, 10 to 50, but is not limited thereto.

The carbon fibers which are 100 nm to 2 µm in diameter may represent that the diameter of carbon fibers randomly selected in an image of the carbon fibers observed by TEM or SEM is in the above-described range. For example, when an image of carbon fibers are captured by TEM and the measured diameters of 10 to 50 carbon fibers randomly selected in the image are all 100 nm to 2 µm, the carbon fibers may be 100 nm to 2 µm in diameter. However, the number of carbon fibers selected in the diameter measurement is not limited to 10 to 50.

When the first conductive material comprises at least one selected from the group consisting of carbon nanotubes and carbon fibers as described above, the battery comprising the positive electrode material composition comprising the same may have low specific resistance and improved capacity.

Meanwhile, when the first conductive material comprises CNT, the CNT is preferably included in an amount of 0.1 to 0.5 wt% based on the total weight 100 wt% of the positive electrode active material, the binder material and the conductive material. In case that the amount of the CNT is below the above-described range, the connection effect of conduction pathways is low, thereby failing to improve the output, and in case that the amount of the CNT is above the above-described range, the CNT forms a film, resulting in clogged pores and poor battery reaction, thereby reducing the output.

Meanwhile, when the first conductive material comprises carbon fibers, the carbon fibers are preferably included in an amount of 0.1 to 5 wt% based on the total weight 100 wt% of the positive electrode active material, the binder material and the conductive material. In case that the amount of the carbon fibers is below the above-described range, the connection effect of conduction pathways is low, thereby failing to improve the output, and in case that the amount of the carbon fibers is above the above-described range, the carbon fibers form a film, resulting in clogged pores and poor battery reaction, thereby reducing the output.

Meanwhile, in an embodiment of the present disclosure, to maintain the average particle size of 5 µm or less and improve dispersion in the positive electrode material composition, the first conductive material may be dispersed in a first solvent, for example, water or a suitable organic solvent (NMP, acetone) to prepare a mixed solution and the mixed solution may be fed into the positive electrode material composition. In particular, the CNT exists as non-dispersible secondary particles when synthesized by vapor synthesis, and even though dispersion is carried out, when its extent is not adequate, the CNT agglomerates into secondary particles having the average particle size of more than 5 µm. When the above-described mixed solution is prepared, the average particle size of the CNT may be controlled to 5 µm or less. Meanwhile, when the first conductive material comprises carbon fibers, the carbon fibers may be adequately dispersed without being first dispersed in a solvent when preparing the mixed solution (slurry) of the positive electrode composition and may have the average particle size of 5 µm or less. Accordingly, the first conductive material is not necessarily added in the form of the mixed solution.

Meanwhile, in an embodiment of the present disclosure, the second conductive material has an average particle size of 10 µm to 70 µm according to the PSD measurement results. The second conductive material comprises CNT. The average number of walls of the CNT may be 1 to 20, and the average diameter of primary particles may be 0.4 to 100 nm. The second conductive material has the average particle size of 10 µm to 70 µm, and comprises secondary particles formed by agglomeration of two or more primary particles. The second conductive material comprising secondary particles of the above-described average particle size is fed into the positive electrode material composition and maintains the average particle size in the positive electrode material composition, and as opposed to the first conductive material, it is better not to apply the process of preparing the mixed solution and pre-dispersing before adding to the positive electrode material composition.

Meanwhile, in a specific embodiment of the present disclosure, the first conductive material is included in an amount of 0.1 to 5 wt% and the second conductive material is included in an amount of 1 to 5 wt% based on the total weight 100 wt% of the positive electrode active material, the binder material and the conductive material.

### Binder material

The binder material may play a role in attaching the positive electrode active material particles to each other and improving the adhesion strength between the positive electrode active material and the positive electrode current collector, and specific examples may include at least one of polyvinylidenefluoride (PVDF), a vinylidene fluoride-hexafluoropropylene copolymer (PVDF-co-HFP), polyvinylalcohol, polyacrylonitrile, carboxymethyl cellulose (CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene butadiene rubber (SBR), fluoro rubber, or a variety of copolymers thereof.

### Other positive electrode materials

In an embodiment of the present disclosure, the positive electrode active material may consist of the sulfur-carbon composite. Meanwhile, in an embodiment of the present disclosure, in addition to the sulfur-carbon composite, the positive electrode active material may further comprise at least one additive selected from transition metal elements, Group IIIA elements, Group IVA elements, sulfur compounds of these elements and alloys of these elements and sulfur.

In a specific embodiment of the present disclosure, the positive electrode active material layer may further comprise lithium transition metal composite oxide represented by the following [Chemical formula 1].

[Chemical formula 1] LiₐNi_{b}Co_{c}M¹_{d}M²ₑO₂

In the above Chemical formula 1, M¹ may be Mn, Al or a combination thereof, and preferably Mn, or Mn and Al.

The M² may be at least one selected from the group consisting of Zr, W, Y, Ba, Ca, Ti, Mg, Ta and Nb, preferably at least one selected from the group consisting of Zr, Y, Mg, and Ti, and more preferably Zr, Y or a combination thereof. The M² is optional, but when it is included in an optimal amount, it may play a role in promoting the particle growth during sintering and improving the crystal structure stability.

Meanwhile, a positive electrode slurry and a positive electrode may be manufactured using the positive electrode material composition as below.

The positive electrode slurry may be prepared by mixing the above-described positive electrode material composition with a second solvent. The solids content in the positive electrode slurry may be in a range between 20 wt% and 50 wt%. The solids in the positive electrode slurry do not comprise the second solvent, and when the first conductive material is pre-dispersed in a form of a mixed solution and the mixed solution is fed, the solids refer to the remaining substances except not only the second solvent but also the first solvent of the pre-dispersed solution.

The first conductive material having the controlled average particle size of 5 µm or less is fed into the slurry. Meanwhile, the second conductive material is fed in a powder state comprising CNT secondary particles, and the average particle size of the secondary particles is 10 µm to 70 µm.

In an embodiment of the present disclosure, the second solvent may comprise at least one selected from water and an organic solvent (NMP or acetone).

Meanwhile, as described above, when the first conductive material comprises CNT, the CNT may be mixed with the first solvent and pre-dispersed such that the average particle size is 5 µm or less, and the resulting mixed solvent may be fed into the slurry.

When the positive electrode slurry is prepared as described above, the positive electrode slurry may be coated on at least one surface of a metal foil for the positive electrode current collector and dried to manufacture the positive electrode. In the manufacture of the positive electrode, the process details about slurry coating, drying, thickness and porosity control by applying pressure may follow the known technology in the technical field pertaining to the present disclosure.

For example, the second solvent may be prepared and the above-described positive electrode material composition may be added to prepare the positive electrode slurry. Meanwhile, in an embodiment of the present disclosure, among the positive electrode material composition, the binder material may be first added to the second solvent to prepare a binder solution, and subsequently, the remaining materials may be added. The second solvent for preparing the positive electrode slurry may preferably include solvents that may uniformly disperse the positive electrode material composition and easily evaporate. Typically, acetonitrile, methanol, ethanol, tetrahydrofuran, water and isopropylalcohol may be used.

The prepared slurry is coated on the current collector and dried to form the positive electrode. The slurry may be coated on the current collector to a proper thickness according to the viscosity of the slurry and desired thickness of the positive electrode.

The coating may be performed by methods commonly used in the corresponding technical field, and for example, may be performed by applying the positive electrode active material slurry over an upper surface of the positive electrode current collector and uniformly spreading using a doctor blade. Besides, the coating may be performed by die casting, comma coating, screen printing or the like.

The drying is not limited to a particular condition, but may be performed under the temperature of 50°C to 200°C within 1 day. The drying may be performed, for example, using an oven, and may be performed in a vacuum condition.

Another aspect of the present disclosure relates to the positive electrode comprising the sulfur-carbon composite. The positive electrode comprises the positive electrode current collector; and the positive electrode active material layer on at least one surface of the positive electrode current collector, wherein the positive electrode active material layer comprises the positive electrode active material, the conductive material and the binder material. The positive electrode active material layer is derived from the above-described positive electrode material composition, and for more details about the positive electrode components, reference is made to the foregoing description. Meanwhile, in an embodiment of the present disclosure, as described above, the positive electrode active material layer comprises the positive electrode active material, the conductive material and the binder material, and the positive electrode active material is included in an amount of 80 to 97 wt%, the conductive material is included in an amount of 2 to 10 wt%, and the binder is included in an amount of 2 to 10 wt% based on the total weight of the positive electrode active material, the conductive material and the binder material. Additionally, the sulfur-carbon composite may be included in an amount of 70 wt% or more based on the total weight of the positive electrode active material, and the sulfur content may be 70 wt% or more based on the total weight of the sulfur-carbon composite. In a specific embodiment of the present disclosure, the sulfur content is preferably 70 wt% or more based on the total weight of the positive electrode active material.

Meanwhile, the positive electrode current collector may include various types of positive electrode current collectors used in the corresponding technical field. For example, the positive electrode current collector may include stainless steel, aluminum, nickel, titanium, sintered carbon or aluminum or stainless steel treated with carbon, nickel, titanium or silver on the surface. The positive electrode current collector may be typically 3 µm to 500 µm in thickness, and the positive electrode current collector may have microtexture on the surface to increase the adhesion strength of the positive electrode active material. The positive electrode current collector may come in various forms, for example, a film, a sheet, a foil, a net, a porous body, a foam and a nonwoven.

Additionally, the present disclosure provides a lithium-sulfur battery comprising an electrode assembly comprising a positive electrode comprising the above-described sulfur-carbon composite and an electrolyte solution. The electrode assembly comprises a positive electrode, a negative electrode and a separator interposed between the positive electrode and the negative electrode.

For example, the electrode assembly may form a stack type or stack/folding structure including the negative electrode and the positive electrode stacked with the separator interposed between the negative electrode and the positive electrode, or a j elly-roll structure including the negative and positive electrodes wound with the separator interposed between. Furthermore, in the jelly-roll structure, an additional separator may be placed on the outer side to prevent the contact between the negative electrode and the positive electrode.

The negative electrode comprises a negative electrode current collector; and a negative electrode active material layer on at least one surface of the negative electrode current collector, and the negative electrode active material layer comprises a negative electrode active material, a conductive material and a binder.

Subsequently, the negative electrode will be described in more detail.

The negative electrode may comprise a long sheet shaped negative electrode current collector and a negative electrode active material layer on one or two surfaces of the negative electrode current collector, and the negative electrode active material layer may comprise the negative electrode active material, the conductive material and the binder.

Specifically, the negative electrode may be manufactured by coating a negative electrode slurry prepared by dispersing the negative electrode active material, the conductive material and the binder in a solvent such as dimethyl sulfoxide (DMSO), isopropyl alcohol, N-methylpyrrolidone (NMP), acetone and water on one or two surfaces of the long sheet shaped negative electrode current collector, and removing the solvent from the negative electrode slurry through a drying process, and rolling. Meanwhile, the negative electrode comprising an uncoated portion may be manufactured by not coating the negative electrode slurry at part of the negative electrode current collector, for example, an end of the negative electrode current collector when coating the negative electrode slurry.

The negative electrode active material may include a material capable of reversible intercalation or deintercalation of lithium ions (Li⁺), a material capable of reversibly forming a lithium containing compound by reaction with lithium ions, a lithium metal and a lithium alloy.

In an embodiment of the present disclosure, when a lithium metal and/or a lithium alloy is used as the negative electrode active material, a metal foil made of these metal materials may be used as the negative electrode, and in this case, the current collector may not be included. The thin film type negative electrode may be 30 µm to 200 µm thick. Meanwhile, in an embodiment of the present disclosure, the negative electrode may be manufactured by laminating a reinforcing material of 100 µm or less on the metal foil or inserting the reinforcing material into the metal foil. The reinforcing material may be porous. Meanwhile, the reinforcing material may be conductive or non-conductive.

The material capable of reversible intercalation or deintercalation of lithium ions may include, for example, crystalline carbon, amorphous carbon or a mixture thereof, and specifically, may include artificial graphite, natural graphite, graphitizable carbon fibers, amorphous carbon, soft carbon and hard carbon, but is not limited thereto. The material capable of reversibly forming the lithium containing compound by reaction with the lithium ions may be, for example, tin oxide, titanium nitrate or a silicon-based compound. The lithium alloy may be, for example, an alloy of lithium (Li) and a metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al) and tin (Sn). Preferably, the negative electrode active material may be a lithium metal, and specifically, may be in a form of a lithium metal foil or a lithium metal powder. The silicon-based negative electrode active material may be Si, a Si-Me alloy (where Me is at least one selected from the group consisting of Al, Sn, Mg, Cu, Fe, Pb, Zn, Mn, Cr, Ti, and Ni), SiO_{y} (where 0<y<2), a Si-C composite or a combination thereof, and preferably SiO_{y} (where 0<y<2). Since the silicon-based negative electrode active material has high theoretical capacity, when the silicon-based negative electrode active material is included, it may be possible to improve capacity characteristics.

The negative electrode current collector may include negative electrode current collectors commonly used in the corresponding technical field, and may include, for example, copper, stainless steel, aluminum, nickel, titanium, sintered carbon, copper or stainless steel treated with carbon, nickel, titanium or silver on the surface, and an aluminum-cadmium alloy. The negative electrode current collector may be typically 3 to 500 µm in thickness, and in the same way as the positive electrode current collector, may have microtexture on the surface to enhance the bonding strength of the negative electrode active material. For example, the negative electrode current collector may come in various forms, for example, a film, a sheet, a foil, a net, a porous body, a foam and a nonwoven.

The conductive material may be used to provide conductive properties to the negative electrode, and may include, without limitation, any conductive material having the ability to conduct electrons without causing any chemical change in the corresponding battery. Specific examples may include at least one of graphite such as natural graphite or artificial graphite; a carbon-based material such as carbon black, acetylene black, ketjen black, channel black, furnace black, lamp black, thermal black, carbon fibers, carbon nanotubes; metal powder or metal fibers of copper, nickel, aluminum, silver; conductive whiskers of zinc oxide, potassium titanate; conductive metal oxide such as titanium oxide; or conductive polymer such as polyphenylene derivatives. The conductive material may be typically included in an amount of 1 to 30 wt%, preferably 1 to 20 wt%, and more preferably 1 to 10 wt% based on the total weight of the negative electrode active material layer.

The binder may play a role in attaching the negative electrode active material particles to each other and improving the adhesion strength between the negative electrode active material and the negative electrode current collector. Specific examples may include at least one of polyvinylidene fluoride (PVDF), a vinylidene fluoride-hexafluoropropylene copolymer (PVDF-co-HFP), polyvinylalcohol, polyacrylonitrile, carboxymethylcellulose (CMC), starch, hydroxypropylcellulose, regenerated cellulose, polyvinylpyrrolidone, polytetrafluoroethylene, polyethylene, polypropylene, ethylene-propylene-diene monomer rubber (EPDM rubber), sulfonated-EPDM, styrene-butadiene rubber (SBR), fluoro rubber, or a variety of copolymers thereof. The binder may be included in an amount of 1 to 30 wt%, preferably 1 to 20 wt%, and more preferably 1 to 10 wt% based on the total weight of the negative electrode active material layer.

Meanwhile, the electrode assembly further comprises the separator, and the separator is disposed between the negative electrode and the positive electrode in the electrode assembly. The separator may separate the negative electrode from the positive electrode and provide movement channels of lithium ions, and may include, without limitation, any type of separator commonly used in lithium secondary batteries. Specifically, the separator may include a porous polymer film, for example, a porous polymer film made of a polyolefin-based polymer such as an ethylene homopolymer, a propylene homopolymer, an ethylene/butene copolymer, an ethylene/hexene copolymer and an ethylene/methacrylate copolymer or a stack structure of two or more of them. Additionally, commonly used porous nonwoven fabrics, for example, nonwoven fabrics made of high melting point glass fibers, polyethyleneterephthalate fibers may be used. Additionally, coated separators comprising ceramics or polymer may be used to ensure heat resistance or mechanical strength.

Another aspect of the present disclosure relates to an electrochemical device comprising the electrode assembly. The electrochemical device may comprise a battery case accommodating the electrode assembly and the electrolyte solution, and the battery case may include, without limitation, any appropriate type of battery case commonly used in the corresponding technical field, for example, a pouch type or a metal can type.

The electrolyte used in the present disclosure may include any type of electrolyte available in lithium secondary batteries, for example, an organic liquid electrolyte, an inorganic liquid electrolyte, a solid polymer electrolyte, a gel polymer electrolyte, a solid inorganic electrolyte and a molten inorganic electrolyte, but is not limited thereto.

Specifically, the electrolyte may comprise an organic solvent and a lithium salt.

The organic solvent may include, without limitation, any type of organic solvent that may act as a medium for the movement of ions involved in the electrochemical reaction of the battery. Specifically, the organic solvent may include an ester-based solvent such as methyl acetate, ethyl acetate, γ-butyrolactone, ε-caprolactone; an ether-based solvent such as dibutyl ether or tetrahydrofuran; a ketone-based solvent such as cyclohexanone; an aromatic hydrocarbon-based solvent such as benzene, fluorobenzene; a carbonate-based solvent such as dimethylcarbonate (DMC), diethylcarbonate (DEC), ethylmethylcarbonate (EMC), ethylene carbonate (EC), propylene carbonate (PC); an alcohol-based solvent such as ethylalcohol, isopropyl alcohol; nitriles of R-CN (R is C2-C20 straight-chain, branched-chain or cyclic hydrocarbon, and may comprise a double bond, an aromatic ring or ether bond); amides such as dimethylformamide; dioxolanes such as 1,3-dioxolane; or sulfolanes.

Meanwhile, in an embodiment of the present disclosure, a nonaqueous solvent of the electrolyte solution preferably comprises an ether-based solvent to improve the charge/discharge performance of the battery. As the nonaqueous solvent, the ether-based solvent may include at least one of linear ether (for example, methoxyethane, ethoxyethane, 1,2-dimethyoxyethane, dimethoxymethane, dimethoxyethane), cyclic ether (for example, 1,3-dioxolane or tetrahydrofuran, tetrohydropyran, etc.), a linear ether compound (for example, 1,2 dimethoxyethane, etc.) or low viscosity fluorinated ether (for example, 1H,1H,2'H,3H-decafluorodipropyl ether, difluoromethyl 2,2,2-trifluoroethyl ether, 1,2,2,2-tetrafluoroethyl trifluoromethyl ether, 1,1,2,3,3,3-hexafluoropropyl difluoromethyl ether, 1H,1H,2'H,3H-decafluorodipropyl ether, pentafluoroethyl 2,2,2-trifluoroethyl ether, 1H,1H,2'H-perfluorodipropyl ether).

The lithium salt may include, without limitation, any compound that provides lithium ions used in lithium secondary batteries. Specifically, the lithium salt may include LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)₂, LiCl, LiI, LiB(C₂O₄)₂, lithium bis (trifluoromethanesulfonyl)imide (LiTFSI), or lithium bis(fluorosulfonyl)imide (LiFSI). The concentration of the lithium salt may be in a range between 0.1 and 5.0M, and preferably 0.1 and 3.0M. When the concentration of the lithium salt is included in the above-described range, the electrolyte may have proper conductivity and viscosity and exhibit the outstanding electrolyte performance, thereby effectively transporting lithium ions.

In addition to the above-described constituent substances of the electrolyte, the electrolyte may further comprise an additive to improve the life characteristics of the battery, prevent the capacity fading of the battery and improve the discharge capacity of the battery. For example, the additive may include at least one of a haloalkylene carbonate-based compound such as difluoro ethylene carbonate, pyridine, triethylphosphite, triethanolamine, cyclic ether, ethylene diamine, n-glyme, hexamethylphosphoric triamide, nitrobenzene derivatives, sulfur, a quinone imine dye, N-substituted oxazolidinone, N,N-substituted imidazolidine, ethylene glycol dialkyl ether, an ammonium salt, pyrrole, 2-methoxy ethanol or aluminum trichloride, but is not limited thereto. The additive may be included in an amount of 0.1 to 10 wt%, and preferably 0.1 to 5 wt% based on the total weight of the electrolyte.

The lithium-sulfur battery is not limited to a particular shape and may come in various shapes, for example, cylindrical, stack and coin shapes.

Additionally, the present disclosure provides a battery module including the lithium-sulfur battery as a unit battery. The battery module may be used as a source of power for medium- and large-scale devices requiring high temperature stability, long cycling characteristics and high capacity characteristics.

Examples of the medium- and large-scale device may include power tools; electric cars including electric vehicles (EV), hybrid electric vehicles (HEV), plug-in hybrid electric vehicles (PHEV); electric two-wheeled vehicles including E-bikes, E-scooters; electric golf carts; energy storage systems that work using power produced by an electric motor, but is not limited thereto.

Hereinafter, examples are presented to help understanding of the present disclosure, but the following examples are provided to describe the present disclosure by way of example and it is obvious to those skilled in the art that various modifications and changes may be made without departing from the scope and technical aspect of the present disclosure, and such modifications and changes fall within the scope of the appended claims.

### Preparation example

### [Manufacture of sulfur-carbon composite]

CNT (average number of walls is 6) particles and sulfur were uniformly mixed and placed in an oven of 155 °C for 30 minutes to manufacture a sulfur-carbon composite. The sulfur content was 75 wt% based on 100 wt% of the sulfur-carbon composite.

### [Manufacture of positive electrode]

### Example 1

The manufactured sulfur-carbon composite, VGCF as a first conductive material, CNT particles (average number of walls is 9) as a second conductive material and poly acrylic acid (PAA) as a binder were added to water at a weight ratio of 92.0:2.5:2.5:3.0 to prepare a positive electrode slurry. The solids concentration in the slurry was 25 wt%. The average particle size of the VGCF was 5 *µ*m. The second conductive material, CNT, comprises agglomerates of particles, the average particle size was 35 *µ*m, and the CNT in powder state was fed into the positive electrode slurry. The slurry was coated on two surfaces of a 20 *µ*m thick aluminum current collector such that the prepared positive electrode slurry composition is 250 *µ*m thick, dried at 50°C for 12 hours and compressed using a roll press to manufacture a positive electrode having the total thickness of 200 *µ*m.

### Example 2

The manufactured sulfur-carbon composite, CNT (average number of walls is 2) as a first conductive material, CNT (average number of walls is 9) as a second conductive material and poly acrylic acid (PAA) as a binder were added to water at a weight ratio of 94.3:0.2:2.5:3.0 to prepare a positive electrode slurry. The solids concentration in the slurry was 25 wt%. The first conductive material, CNT, was fed into the slurry in a form of a mixed solution in which CNT is dispersed in water. A weight ratio of water:CNT:dispersant in the mixed solution was 99:0.3:0.7. Additionally, the average particle size of the CNT in the mixed solution was 1 *µ*m. The second conductive material, CNT, comprises agglomerates of particles, the average particle size was 35 *µ*m and the CNT in powder state was fed into the positive electrode slurry. The slurry was coated on two surfaces of a 20 *µ*m thick aluminum current collector such that the prepared positive electrode slurry composition was 250 *µ*m thick, dried at 50°C for 12 hours and compressed using a roll press to manufacture a positive having the thickness of 200 *µ*m.

### Comparative example 1

The manufactured sulfur-carbon composite and poly acrylic acid (PAA) as a binder were added to water at a weight ratio of 97:3 to prepare a positive electrode slurry. The solids concentration in the slurry was 25 wt%. The slurry was coated on two surfaces of a 20 *µ*m thick aluminum current collector such that the prepared positive electrode slurry composition was 250 *µ*m thick, dried at 50°C for 12 hours and compressed using a roll press to manufacture a positive electrode having the thickness of 200 *µ*m.

### Comparative example 2

The manufactured sulfur-carbon composite, VGCF as a conductive material and poly acrylic acid (PAA) as a binder were added to water at a weight ratio of 94.5:2.5:3.0 to prepare a positive electrode slurry. The solids concentration in the slurry was 25 wt%. The average particle size of the VGCF was 5 *µ*m. The slurry was coated on two surfaces of a 20 *µ*m thick aluminum current collector such that the prepared positive electrode slurry composition was 250 *µ*m thick, dried at 50°C for 12 hours and compressed using a roll press to manufacture a positive electrode having the thickness of 200 *µ*m.

### Comparative example 3

The manufactured sulfur-carbon composite, VGCF as a conductive material and poly acrylic acid (PAA) as a binder were added to water at a weight ratio of 92.0:5.0:3.0 to prepare a positive electrode slurry. The solids concentration in the slurry was 25 wt%. The average particle size of the VGCF was 5 *µ*m. The slurry was coated on two surfaces of a 20 *µ*m thick aluminum current collector such that the prepared positive electrode slurry composition was 250 *µ*m thick, dried at 50°C for 12 hours and compressed using a roll press to manufacture a positive electrode having the thickness of 200 *µ*m.

### Comparative example 4

The manufactured sulfur-carbon composite, VGCF as a conductive material and poly acrylic acid (PAA) as a binder were added to water at a weight ratio of 87.0: 10.0:3.0 to prepare a positive electrode slurry. The solids concentration in the slurry was 25 wt%. The average particle size of the VGCF was 5 *µ*m. The slurry was coated on two surfaces of a 20 *µ*m thick aluminum current collector such that the prepared positive electrode slurry composition was 250 *µ*m thick, dried at 50 °C for 12 hours and compressed using a roll press to manufacture a positive electrode having the thickness of 200 *µ*m.

### Comparative example 5

The manufactured sulfur-carbon composite, CNT (average number of walls is 2) as a conductive material and poly acrylic acid (PAA) as a binder were added to water at a weight ratio of 96.75:0.25:3.0 to prepare a positive electrode slurry. The solids concentration in the slurry was 25 wt%. The CNT was fed into the slurry in a form of a mixed solution in which the CNT is dispersed in water. A weight ratio of water:CNT:dispersant in the mixed solution was 99 : 0.3 :0.7. Additionally, the average particle size of the CNT in the mixed solution was about 1 *µ*m. The slurry was coated on a 20 *µ*m thick aluminum current collector such that the prepared positive electrode slurry composition was 350 *µ*m thick, dried at 50 °C for 12 hours and compressed using a roll press to manufacture a positive electrode having the thickness of 200 *µ*m.

### Comparative example 6

The manufactured sulfur-carbon composite, CNT (average number of walls is 2) as a conductive material and poly acrylic acid (PAA) as a binder were added to water at a weight ratio of 96.5:0.5:3.0 to prepare a positive electrode slurry. The solids concentration in the slurry was 25 wt%. The CNT was fed into the slurry in a form of a mixed solution in which the CNT is dispersed in water. A weight ratio of water:CNT:dispersant in the mixed solution was 99 : 0.3 :0.7. Additionally, the average particle size of the CNT in the mixed solution was about 1 *µ*m. The slurry was coated on a 20 *µ*m thick aluminum current collector such that the prepared positive electrode slurry composition was 350 *µ*m thick, dried at 50°C for 12 hours and compressed using a roll press to manufacture a positive electrode having the thickness of 200 *µ*m.

### Comparative example 7

The manufactured sulfur-carbon composite, CNT (average number of walls is 2) as a conductive material and poly acrylic acid (PAA) as a binder were added to water at a weight ratio of 96.0:1.0:3.0 to prepare a positive electrode slurry. The solids concentration in the slurry was 25 wt%. The CNT was fed into the slurry in a form of a mixed solution in which the CNT is dispersed in water. A weight ratio of water:CNT:dispersant in the mixed solution was 99 : 0.3 :0.7. Additionally, the average particle size of the CNT in the mixed solution was about 1 *µ*m. The slurry was coated on a 20 *µ*m thick aluminum current collector such that the prepared positive electrode slurry composition was 350 *µ*m thick, dried at 50°C for 12 hours and compressed using a roll press to manufacture a positive electrode having the thickness of 200 *µ*m.

### Comparative example 8

The manufactured sulfur-carbon composite, CNT (average number of walls is 2) as a conductive material and poly acrylic acid (PAA) as a binder were added to water at a weight ratio of 94.0:3.0:3.0 to prepare a positive electrode slurry. The solids concentration in the slurry was 25 wt%. The CNT was fed into the slurry in a form of a mixed solution in which the CNT is dispersed in water. A weight ratio of water:CNT:dispersant in the mixed solution was 99 : 0.3 :0.7. Additionally, the average particle size of the CNT in the mixed solution was about 1 *µ*m. The slurry was coated on a 20 *µ*m thick aluminum current collector such that the prepared positive electrode slurry composition was 350 *µ*m thick, dried at 50°C for 12 hours and compressed using a roll press to manufacture a positive electrode having the thickness of 200 *µ*m.

### Comparative example 9

The manufactured sulfur-carbon composite, CNT (average number of walls is 9) as a conductive material and poly acrylic acid (PAA) as a binder were added to water at a weight ratio of 94.5:2.5:3.0 to prepare a positive electrode slurry. The solids concentration in the slurry was 25 wt%. The CNT comprises agglomerates of particles, the average particle size was 35 *µ*m and the CNT in powder state was fed into the positive electrode slurry. The slurry was coated on two surfaces of a 20 *µ*m thick aluminum current collector such that the prepared positive electrode slurry composition was 250 *µ*m thick, dried at 50 °C for 12 hours and compressed using a roll press to manufacture a positive electrode having the thickness of 200 *µ*m.

### Comparative example 10

The manufactured sulfur-carbon composite, CNT (average number of walls is 9) as a conductive material and poly acrylic acid (PAA) as a binder were added to water at a weight ratio of 92.0:5.0:3.0 to prepare a positive electrode slurry. The solids concentration in the slurry was 25 wt%. The CNT comprises agglomerates of particles, the average particle size was 35 *µ*m and the CNT in powder state was fed into the positive electrode slurry. The slurry was coated on two surfaces of a 20 *µ*m thick aluminum current collector such that the prepared positive electrode slurry composition was 250 *µ*m thick, dried at 50 °C for 12 hours and compressed using a roll press to manufacture a positive electrode having the thickness of 200 *µ*m.

### Comparative example 11

The manufactured sulfur-carbon composite, VGCF as a first conductive material, ketjen black as a second conductive material and poly acrylic acid (PAA) as a binder were added to water at a weight ratio of 92.0:2.5:2.5:3.0 to prepare a positive electrode slurry. The solids concentration in the slurry was 25 wt%. The average particle size of the VGCF was 5 *µ*m. The second conductive material, ketjen black, comprises agglomerates of particles, the average particle size was 35 *µ*m and the ketjen black in powder state was fed into the positive electrode slurry. The slurry was coated on two surfaces of a 20 *µ*m thick aluminum current collector such that the prepared positive electrode slurry composition was 250 *µ*m thick, dried at 50°C for 12 hours and compressed using a roll press to manufacture a positive electrode having the total thickness of 200 *µ*m.

### [Manufacture of battery]

For a negative electrode, a 35 *µ*m thick lithium metal foil was used, and for an electrolyte, a mixed solution was used in which 0.6M lithium bis(trifluoromethanesulfonyl)imide (LiTFSI) and 3 wt% of lithium nitrate (LiNO₃) was dissolved in a mixed organic solvent of 2-methyl furan and dimethoxyethane at a 33:77 volume ratio.

Specifically, the positive electrode and the negative electrode were placed with an polyethylene separator having the thickness of 20 *µ*m and porosity of 45% interposed between, and the electrolyte was injected to manufacture a lithium-sulfur battery. The battery comprises a stack of seven sheets of positive electrodes and seven sheets of negative electrodes.

### [Evaluation]

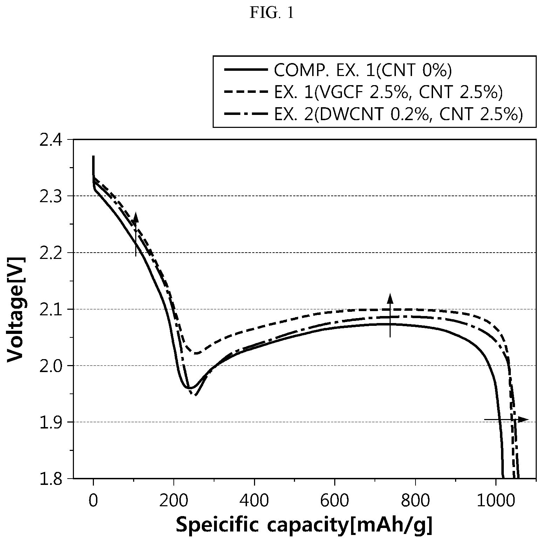

Referring to FIG. 1, it was confirmed that when the first and second conductive materials according to the present disclosure were used as in examples 1 and 2, the output and capacity at the start/end of discharge was improved.

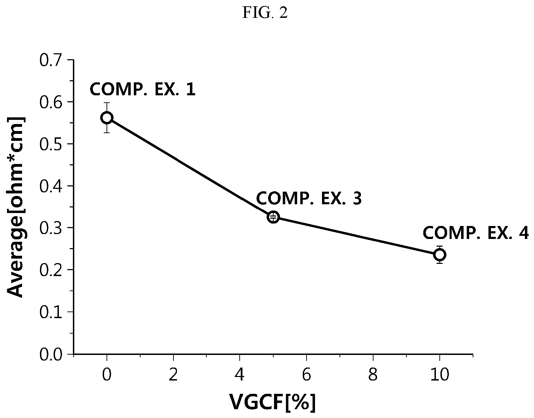

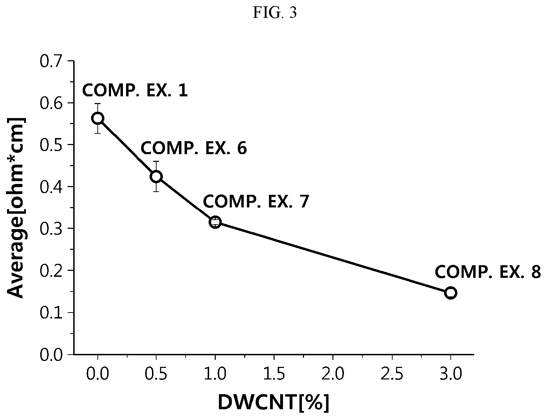

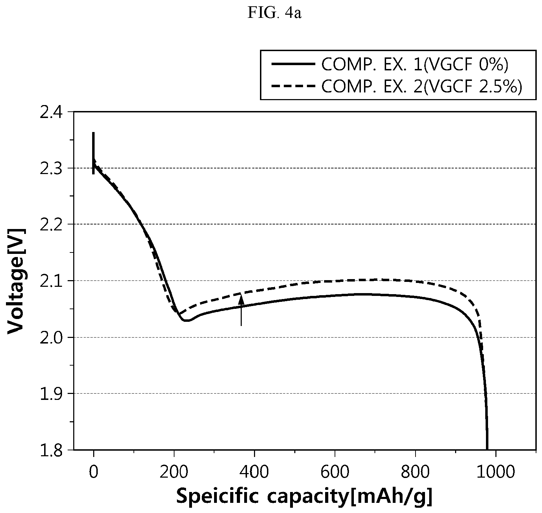

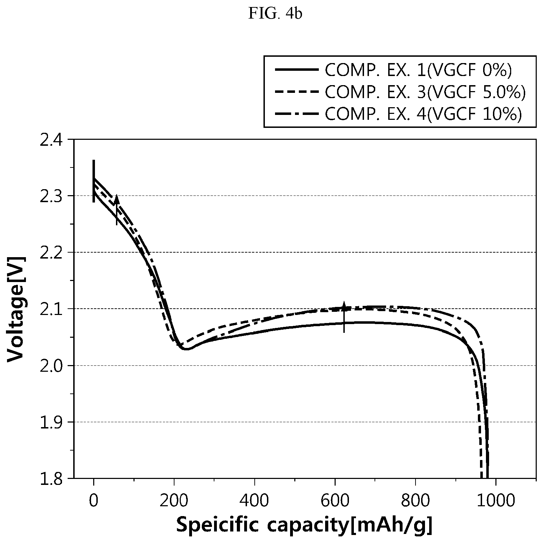

Meanwhile, as can be seen from FIGS. 2 and 3, it was confirmed that when only VCGF was used as the conductive material as in comparative examples 2 and 3 or only dispersed CNT was used as in comparative examples 4 and 5, the specific resistance reduction was prevented according to the added amount. Accordingly, when only VGCF is used 2.5% as in comparative example 2 of FIGS. 4a and 4b, the output is improved. However, it can be seen that when VGCF is included more than 5% and 10% as in comparative example 4, there is almost no additional output improvement effect compared to VGCF 5%.

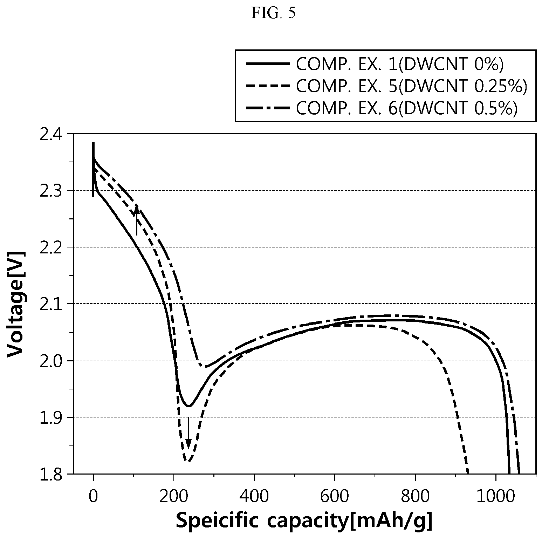

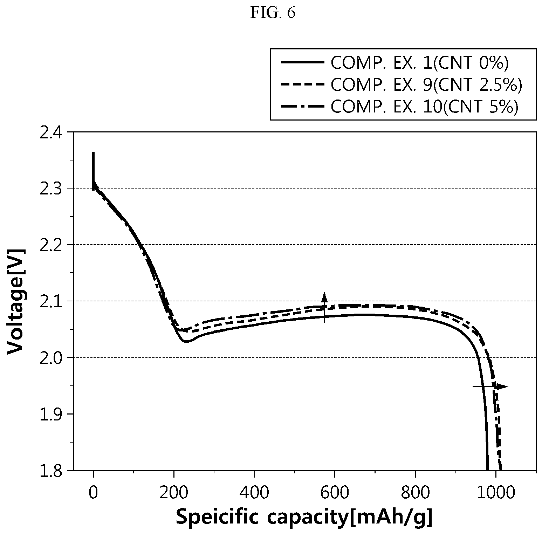

Additionally, as shown in FIG. 5, when dispersed CNT is used 0.25% as in comparative example 5, the output in the middle/at the end is improved, but when dispersed CNT is used 0.5% as in comparative example 6, the output in the middle/at the end decreases. Additionally, as shown in FIG. 6, the use of non-dispersed CNT particles improves the capacity and output at the end, but does not improve the output at the start.

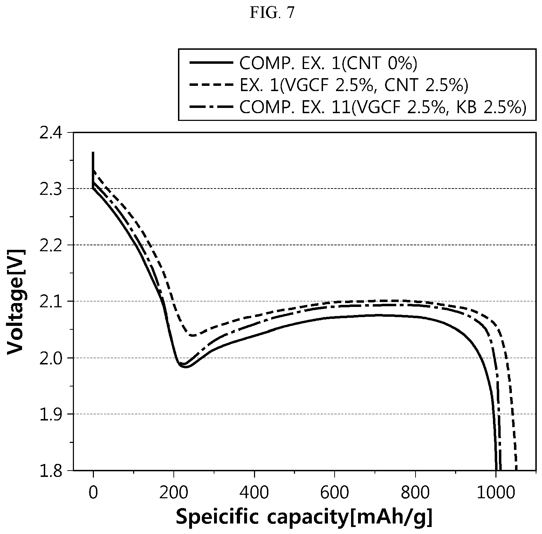

Meanwhile, as shown in FIG. 7, it can be seen that comparative example 1 without CNT and comparative example 11 using ketjen black as the second conductive material have almost no improvement effect of specific resistance and capacity compared to example 1.

### Experimental example 1. Particle size measurement method

The particle size corresponding to D₅₀ was measured by a dry method using a particle size analyzer (model name: Bluewave, manufacturer: Microtrac). When the carbon material comprises secondary particles by agglomeration of primary particles, the particle size of the primary particles was observed and measured using SEM (model name: SEM, manufacturer: JEOL)

### Experimental example 2. Measurement of discharge characteristics

Each battery of example and comparative example was discharged at 0.2C in CC mode at 25°C until 1.8V, and charged with 0.2C constant current until 2.5V, and the discharge capacity was measured and compared. The discharge capacity was measured based on the sulfur content (mAh/g(S)).

### Experimental example 3. Measurement of specific electrode resistance

The specific electrode resistance was measured using Hioki RM 2610. Specifically, the specific resistance was measured by bringing the manufactured electrode into contact with a multi electrode array of the machine, and a specific resistance value of an electrode layer was obtained from the measurement results.

## Claims

1. A positive electrode material composition, comprising:
a positive electrode active material, a conductive material and a binder material,
wherein the positive electrode active material comprises a sulfur-carbon composite comprising a porous carbon material and sulfur (S),
wherein the porous carbon material has conductive properties,
wherein the conductive material comprises a first conductive material and a second conductive material,
wherein the first conductive material comprises fibers having an average particle size (D₅₀) of 5 µm or less,
wherein the second conductive material comprises secondary particles, wherein the secondary particles comprises agglomerates of two or more primary particles of carbon nanotubes (CNT), and an average particle size (D₅₀) of the second conductive material is 10 *µ*m to 70 *µ*m wherein D₅₀ refers to a particle size at 50% of cumulative volume particle size distribution of particles, measured using a laser diffraction method, as indicated in the description, and
wherein the positive electrode active material is included in a range between 80 and 97 wt%, the conductive material is included in a range between 2 and 10 wt%, and the binder material is included in a range between 2 and 10 wt%, and
wherein the first conductive material is included in an amount of 0.1 to 5 wt% and the second conductive material is included in an amount of 1 to 5 wt% based on a total weight 100 wt% of the positive electrode active material, the binder material and the conductive material.

2. The positive electrode material composition according to claim 1, wherein the first conductive material comprises CNT, and an average number of walls of the CNT is 1 to 20.

3. The positive electrode material composition according to claim 2, wherein the first conductive material comprises the CNT, and the first conductive material is included in an amount of 0.1 to 0.5 wt% based on a total weight 100 wt% of the positive electrode active material, the binder material and the conductive material.

4. The positive electrode material composition according to claim 1, wherein the first conductive material comprises carbon fibers, and the carbon fibers are 100 nm to 2 *µ*m in diameter as measured from 10 to 50 randomly selected fibers using TEM or SEM.

5. The positive electrode material composition according to claim 1, wherein an average number of walls of the CNT as the second conductive material is 1 to 20, and an average diameter of the primary particles of the CNT is 0.4 to 100 nm as measured using TEM or SEM.

6. The positive electrode material composition according to claim 1, wherein the porous carbon material has a BET specific surface area of the primary particles in a range between 100 and 3,000 m²/g as measured by the Brunauer, Emmett and Teller (BET) method, calculated from the adsorption amount of nitrogen gas under the liquid nitrogen temperature (77K).

7. The positive electrode material composition according to claim 1, wherein the porous carbon material comprises at least one selected from the group consisting of activated carbon, CNT and graphene.

8. The positive electrode material composition according to claim 7, wherein an average number of walls of the CNT is 1 to 20.

9. The positive electrode material composition according to claim 1, wherein the sulfur-carbon composite has at least one of a form of a composite into which the sulfur and the carbon material are simply mixed, a form of a coated core-shell structure, or a form of sulfur loading into pores in the carbon material.

10. A positive electrode for an electrochemical device, comprising:
the positive electrode material composition according to any one of claims 1 to 9.

11. A lithium secondary battery, comprising:
the positive electrode for the electrochemical device according to claim 10.

12. A method for preparing a positive electrode forming slurry, comprising:
mixing the positive electrode material composition according to claim 1 with a second solvent;
wherein the mixing comprises:
adding a first conductive material having a controlled average particle size (D₅₀) of 5 *µ*m or less and
adding a second conductive material in powder state,
wherein the second conductive material comprises secondary particles comprising agglomerates of two or more primary particles of carbon nanotubes (CNT), and an average particle size (D₅₀) of the second conductive material comprising the secondary particles is 10 *µ*m to 70 *µ*m

13. The method for preparing the positive electrode forming slurry according to claim 12, wherein the second solvent comprises at least one selected from water and an organic solvent.

14. The method for preparing the positive electrode forming slurry according to claim 12, wherein when the first conductive material comprises CNT, the CNT is fed into the slurry in a form of a mixed solvent in which the CNT is mixed with a first solvent.

## Patentansprüche

1. Positivelektrodenmaterialzusammensetzung, umfassend:
ein Positivelektrodenaktivmaterial, ein leitfähiges Material und ein Bindemittelmaterial,
wobei das Positivelektrodenaktivmaterial einen Schwefel-Kohlenstoff-Verbundstoff umfasst, der ein poröses Kohlenstoffmaterial und Schwefel (S) umfasst,
wobei das poröse Kohlenstoffmaterial leitfähige Eigenschaften aufweist,
wobei das leitfähige Material ein erstes leitfähiges Material und ein zweites leitfähiges Material umfasst,
wobei das erste leitfähige Material Fasern mit einer durchschnittlichen Teilchengröße (D₅₀) von 5 µm oder weniger umfasst,
wobei das zweite leitfähige Material Sekundärteilchen umfasst, wobei die Sekundärteilchen Agglomerate von zwei oder mehr Primärteilchen von Kohlenstoff-Nanoröhren (CNT) umfassen und eine durchschnittliche Teilchengröße (D₅₀) des zweiten leitfähigen Materials 10 µm bis 70 µm beträgt, wobei sich D₅₀ auf eine Teilchengröße bei 50% der kumulativen Volumenteilchengrößenverteilung von Teilchen, gemessen unter Verwendung eines Laserbeugungsverfahrens, wie in der Beschreibung angegeben, bezieht, und
wobei das Positivelektrodenaktivmaterial in einem Bereich zwischen 80 und 97 Gew.-% enthalten ist, das leitfähige Material in einem Bereich zwischen 2 und 10 Gew.-% enthalten ist und das Bindemittelmaterial in einem Bereich zwischen 2 und 10 Gew.-% enthalten ist, und
wobei das erste leitfähige Material in einer Menge von 0,1 bis 5 Gew.-% enthalten ist und das zweite leitfähige Material in einer Menge von 1 bis 5 Gew.-% enthalten ist, bezogen auf ein Gesamtgewicht von 100 Gew.-% des Positivelektrodenaktivmaterials, des Bindemittelmaterials und des leitfähigen Materials.

2. Positivelektrodenmaterialzusammensetzung nach Anspruch 1, bei dem das erste leitfähige Material CNT umfasst und eine durchschnittliche Anzahl von Wänden der CNT 1 bis 20 beträgt.

3. Positivelektrodenmaterialzusammensetzung nach Anspruch 2, bei dem das erste leitfähige Material die CNT umfasst und das erste leitfähige Material in einer Menge von 0,1 bis 0,5 Gew.-% enthalten ist, bezogen auf ein Gesamtgewicht von 100 Gew.-% des Positivelektrodenaktivmaterials, des Bindemittelmaterials und des leitfähigen Materials.

4. Positivelektrodenmaterialzusammensetzung nach Anspruch 1, bei dem das erste leitfähige Material Kohlenstofffasern umfasst und die Kohlenstofffasern einen Durchmesser von 100 nm bis 2 µm aufweisen, gemessen an 10 bis 50 zufällig ausgewählten Fasern unter Verwendung von TEM oder SEM.

5. Positivelektrodenmaterialzusammensetzung nach Anspruch 1, bei dem eine durchschnittliche Anzahl von Wänden der CNT als das zweite leitfähige Material 1 bis 20 beträgt und ein durchschnittlicher Durchmesser der Primärteilchen der CNT 0,4 bis 100 nm beträgt, gemessen unter Verwendung von TEM oder SEM.

6. Positivelektrodenmaterialzusammensetzung nach Anspruch 1, bei der das poröse Kohlenstoffmaterial eine spezifische BET-Oberfläche der Primärteilchen in einem Bereich zwischen 100 und 3.000 m² /g aufweist, gemessen nach dem Brunauer-, Emmett- und Teller-(BET)-Verfahren, berechnet aus der Adsorptionsmenge von Stickstoffgas unter der Flüssigstickstofftemperatur (77K).

7. Positivelektrodenmaterialzusammensetzung nach Anspruch 1, bei der das poröse Kohlenstoffmaterial mindestens eines umfasst, das aus der Gruppe ausgewählt ist, die aus Aktivkohle, CNT und Graphen besteht.

8. Positivelektrodenmaterialzusammensetzung nach Anspruch 7, bei der eine durchschnittliche Anzahl von Wänden der CNT 1 bis 20 beträgt.

9. Positivelektrodenmaterialzusammensetzung nach Anspruch 1, bei der der Schwefel-Kohlenstoff-Verbundstoff mindestens eines von einer Form eines Verbundstoffs, in den der Schwefel und das Kohlenstoffmaterial einfach gemischt sind, einer Form einer beschichteten Kern-Schale-Struktur oder einer Form einer Schwefelbeladung in Poren in dem Kohlenstoffmaterial aufweist.

10. Positivelektrode für eine elektrochemische Vorrichtung, umfassend:
die Positivelektrodenmaterialzusammensetzung nach einem der Ansprüche 1 bis 9.

11. Lithiumsekundärbatterie, umfassend:
die Positivelektrode für die elektrochemische Vorrichtung nach Anspruch 10.

12. Verfahren zum Herstellen einer Positivelektrodenbildungsaufschlämmung, umfassend:
Mischen der Positivelektrodenmaterialzusammensetzung nach Anspruch 1 mit einem zweiten Lösungsmittel;
wobei das Mischen umfasst:
Zugeben eines ersten leitfähigen Materials mit einer kontrollierten durchschnittlichen Teilchengröße (D₅₀) von 5 µm oder weniger und
Zugeben eines zweiten leitfähigen Materials in Pulverform,
wobei das zweite leitfähige Material Sekundärteilchen umfasst, die Agglomerate von zwei oder mehr Primärteilchen von Kohlenstoff-Nanoröhren (CNT) umfassen, und eine durchschnittliche Teilchengröße (D₅₀) des zweiten leitfähigen Materials, das die Sekundärteilchen umfasst, 10 µm bis 70 µm beträgt.

13. Verfahren zum Herstellen der Positivelektrodenbildungsaufschlämmung nach Anspruch 12, bei dem das zweite Lösungsmittel mindestens eines umfasst, das aus Wasser und einem organischen Lösungsmittel ausgewählt ist.

14. Verfahren zum Herstellen der Positivelektrodenbildungsaufschlämmung nach Anspruch 12, bei dem, wenn das erste leitfähige Material CNT umfasst, das CNT in Form eines gemischten Lösungsmittels, in dem das CNT mit einem ersten Lösungsmittel gemischt ist, in die Aufschlämmung eingespeist wird.

## Revendications

1. Composition de matériau d'électrode positive, comprenant :
un matériau actif d'électrode positive, un matériau conducteur et un matériau liant,
dans laquelle le matériau actif d'électrode positive comprend un composite de soufre-carbone comprenant un matériau de carbone poreux et un soufre (S),
dans laquelle le matériau de carbone poreux a des propriétés conductrices,
dans laquelle le matériau conducteur comprend un premier matériau conducteur et un deuxième matériau conducteur,
dans laquelle le premier matériau conducteur comprend des fibres ayant une taille moyenne de particule (D₅₀) égale ou inférieure à 5 µm,
dans laquelle le deuxième matériau conducteur comprend des particules secondaires, dans laquelle les particules secondaires comprennent des agglomérats de deux ou plus de deux particules primaires de nanotubes de carbone (CNT), et une taille moyenne de particule (D₅₀) du deuxième matériau conducteur est 10 µm à 70 µm, dans laquelle D₅₀ réfère à une taille de particule à 50 % de distribution de taille des particules en volume cumulé, mesurée en utilisant un procédé de diffraction laser, comme indiqué dans la description, et
dans laquelle le matériau actif d'électrode positive est inclus dans une plage de 80 à 97 % en poids, le matériau conducteur est inclus dans une plage de 2 à 10 % en poids et le matériau liant est inclus dans une plage de 2 à 10 % en poids, et
dans laquelle le premier matériau conducteur est inclus dans une quantité de 0,1 à 5 % en poids et le deuxième matériau conducteur est inclus dans une quantité de 1 à 5 % en poids sur la base d'un poids total 100 % en poids du matériau actif d'électrode positive, du matériau liant et du matériau conducteur.

2. Composition de matériau d'électrode positive selon la revendication 1, dans laquelle le premier matériau conducteur comprend des CNT, et un nombre moyen de parois des CNT est 1 à 20.

3. Composition de matériau d'électrode positive selon la revendication 2, dans laquelle le premier matériau conducteur comprend les CNT, et le premier matériau conducteur est inclus dans une quantité de 0,1 à 0,5 % en poids sur la base d'un poids total 100 % en poids du matériau actif d'électrode positive, du matériau liant et du matériau conducteur.

4. Composition de matériau d'électrode positive selon la revendication 1, dans laquelle le premier matériau conducteur comprend des fibres de carbone, et les fibres de carbone ont un diamètre de 100 nm à 2 µm, mesuré parmi 10 à 50 fibres sélectionnées au hasard en utilisant un microscope TEM ou SEM.

5. Composition de matériau d'électrode positive selon la revendication 1, dans laquelle un nombre moyen de parois des CNT étant le deuxième matériau conducteur est 1 à 20, et un diamètre moyen des particules primaires des CNT est 0,4 à 100 nm, mesuré en utilisant un microscope TEM ou SEM.

6. Composition de matériau d'électrode positive selon la revendication 1, dans laquelle le matériau de carbone poreux a une surface spécifique BET des particules primaires dans une plage de 100 à 3000 m²/g, mesurée par le procédé de Brunauer, Emmett et Teller (BET), calculée à partir d'une quantité d'adsorption d'azote gazeux à la température de l'azote liquide (77K).

7. Composition de matériau d'électrode positive selon la revendication 1, dans laquelle le matériau de carbone poreux comprend un ou plusieurs éléments sélectionnés dans le groupe constitué de charbon actif, de CNT et de graphène.

8. Composition de matériau d'électrode positive selon la revendication 7, dans laquelle un nombre moyen de parois des CNT est 1 à 20.

9. Composition de matériau d'électrode positive selon la revendication 1, dans laquelle le composite de soufre-carbone a soit une forme d'un composite dans lequel le soufre et le matériau de carbone sont simplement mélangés, soit une forme d'une structure noyau-enveloppe revêtue, soit une forme de soufre chargé dans des pores dans le matériau de carbone.

10. Électrode positive pour un dispositif électrochimique, comprenant :
la composition de matériau d'électrode positive selon l'une quelconque des revendications 1 à 9.

11. Batterie rechargeable au lithium-soufre, comprenant :
l'électrode positive pour le dispositif électrochimique selon la revendication 10.

12. Procédé de préparation d'une électrode positive formant une suspension, consistant à :
mélanger la composition de matériau d'électrode positive selon la revendication 1 avec un deuxième solvant ;
dans lequel le mélangeage consiste à :
ajouter un premier matériau conducteur ayant une taille moyenne de particule (D₅₀) régulée égale ou inférieure à 5 µm, et
ajouter un deuxième matériau conducteur à l'état de poudre,
dans lequel le deuxième matériau conducteur comprend des particules secondaires comprenant des agglomérats de deux ou plus de deux particules primaires de nanotubes de carbone (CNT), et une taille moyenne de particule (D₅₀) du deuxième matériau conducteur comprenant les particules secondaires est 10 µm à 70 µm.

13. Procédé de préparation de l'électrode positive formant une suspension selon la revendication 12, dans lequel le deuxième solvant comprend un ou plusieurs éléments sélectionnés parmi de l'eau et un solvant organique.

14. Procédé de préparation de l'électrode positive formant une suspension selon la revendication 12, dans lequel, lorsque le premier matériau conducteur comprend des CNT, les CNT sont envoyés dans la suspension sous forme d'un solvant mélangé dans laquelle les CNT sont mélangés avec un premier solvant.
